# EUROPEAN PATENT SPECIFICATION

(11) **EP 4 185 096 B1**
(45) Date of publication and mention of the grant of the patent: **24.07.2024**
(21) Application number: 21756045.7
(22) Date of filing: 23.07.2021
(51) Int. Cl.: A01B 3/46

(54) **REVERSIBLE PLOUGH**
UMKEHRBARER PFLUG
CHARRUE RÉVERSIBLE

(30) Priority: 23.07.2020 IT 202000017923
(43) Date of publication of application: 31.05.2023
(73) Proprietor: Maschio Gaspardo S.p.A., 35011 Campodarsego (PD) (IT)
(72) Inventor: MASCHIO, Andrea, 33075 Morsano al Tagl.to (PN) (IT); MILAN, Federico, 30026 Portogruaro (VE) (IT); DE LORENZI, Massimo, 33079 Sesto al Reghena (PN) (IT)
(74) Representative: Locas, Davide
(86) International application number: PCT/IB2021/056663
(87) International publication number: WO 2022/018693

(56) References cited:
- EP-A1- 2 617 277
- CN-B- 105 007 714
- DE-A1- 102006 039 513
- US-A- 5 603 381

## Description

The invention relates to a reversible plough having a headstock, on which there is hinged a frame which in turn carries at least one pair of opposite ploughing members, having an inversion cylinder between the frame and the headstock in order to rotate the frame in relation to the headstock between two ploughing operating positions from a positioning step at one side of the plough to a repositioning step at the opposite side passing via a dead centre position of the inversion cylinder and having a support wheel which is mounted on the frame of the plough in order to adjust the working depth of the reversible plough, which wheel is orientable for guiding the depth of the reversible plough in both rotational positions at the opposite sides of the frame of the plough and can be actuated by means of a hydraulic cylinder.

Reversible ploughs generally comprise a frame which is rotatably mounted on a headstock which is provided with a three-point attachment with respect to an agricultural tractor. There are normally provided between the frame and headstock an inversion cylinder, with which the frame is rotated about the hinging axis in order to move into a working position a row of ploughing members in an advance direction and another row of ploughing members during a return direction while always turning over the ploughed section of earth at the same side. This operation is known in the sector as even ploughing.

There is generally associated with the frame an adjustment device for the ploughing depth with a wheel which, following the rotation of the frame, rotates therewith and with a return element which maintains the wheel in the desired operating position in both advance and return directions. Typically, this return element is constructed by a spring or a hydraulic cylinder.

The plough is preferably provided with an alignment cylinder which, in the initial step of rotation of the frame about the hinging axis, reduces the ploughing extent by moving the frame towards the rotation axis and therefore brings it into the initial adjustment in order to facilitate the rotation thereof and to prevent occurrences of jamming of the ploughing members.

A reversible plough including such features is known from FR2892596.

In this document, the alignment, inversion and adjustment cylinders of the wheel are connected to each other so that, in the initial step of rotation of the frame (inversion), the wheel is raised into an intermediate position and therefore repositioned at the opposite side after the frame is rotated through 180° by means of the inversion cylinder. However, the architecture of this system is rather complex and requires double control of the hydraulic cylinder which is provided for the adjustment of the depth wheel in order to raise the wheel before the inversion and then to reposition it at the opposite ploughing side once the inversion has taken place.

WO2010/108468 describes a reversible plough, wherein the adjustment wheel for the depth tilts between two predetermined positions following the rotation of the frame under the control of a double-action hydraulic damping cylinder and with a pressure accumulator which adjusts the exchange of oil between the two chambers of the damper cylinder.

This system also involves a relatively complex architecture which is subjected to possible malfunctions in an extremely aggressive environment such as the one in which an agricultural machine operates.

EP2617277 also describes another reversible plough, in which the depth adjustment wheel tilts between two predetermined positions following the rotation of the frame. In this case, the control of the adjustment wheel is carried out via two hydraulic cylinders which are arranged in sequence in such a manner that the second one is articulated to the end of the first one.

However, it is evident that this solution is found to be particularly delicate and liable to malfunction. In fact, it must be observed that each of the two cylinders has to at least partially withstand the weight of the plough and it is therefore heavily stressed, including under consideration of the fact that the rods of the two cylinders are susceptible to loading in a transverse direction relative to the axis thereof. Furthermore, if the pressure in one of the two cylinders is insufficient, the other cylinder would not be capable of ensuring the positioning of the wheel which - in a state urged in an upward direction - would rise up.

Furthermore, the solution described in EP2617277 is not found to be optimal for transporting the plough. In fact, given that the transport of the plough is carried out with the frame arranged in an intermediate rotation position between the two ploughing operating positions, it is not possible to arrange the wheel in a position suitable for transporting the plough without necessarily having to disconnect the depth adjustment cylinder.

In all the above-mentioned cases, the positioning control of the adjustment wheel at one side or the other of the frame requires the use of double-action hydraulic cylinders.

Therefore, there is perceived the need to provide a reversible plough of the type indicated above which is structurally simple and preferably such as to allow positional control of the depth adjustment wheel by means of a single-action hydraulic cylinder under both working conditions of the plough.

The technical problem addressed by the present invention is to provide a reversible plough which is structurally and functionally configured to at least partially overcome one or more of the disadvantages set out with reference to the cited prior art.

This problem is solved by the invention by means of a reversible plough which is constructed according to one or more of the features of the appended claims. This problem is solved according to the invention by means of a reversible plough comprising a headstock, on which there is hinged a frame which in turn carries preferably at least one pair of opposite ploughing members, and an inversion cylinder between the frame and the headstock in order to rotate the frame in relation to the headstock between two ploughing operating positions from a positioning step at one side of the plough to a repositioning step at the opposite side passing preferably via a dead centre position of the inversion cylinder.

There is further provided a support wheel which is mounted on the frame of the plough in order to adjust the working depth thereof. It must be observed that the wheel is reversible together with the frame in order to adjust the working depth of the plough in both rotational positions at the opposite sides of the frame of the plough. Furthermore, the wheel can be blocked in an operating position by means of a hydraulic blocking cylinder.

It will be appreciated that, according to an embodiment of the invention, the hydraulic blocking cylinder has a pressurization chamber which is selectively hydraulically connected to the inversion cylinder and/or an alignment cylinder by means of a control valve. The control valve is preferably configured to connect the pressurization chamber for discharge during the step of rotating the plough by the inversion cylinder and to supply the chamber with pressure when the inversion cylinder and/or the alignment cylinder is/are carrying out or have completed the repositioning step. In this context, advantageously, the hydraulic blocking cylinder is configured to allow the orientation of the wheel during the rotation of the plough and to block the orientation of the wheel when the plough takes up a ploughing operating position.

In an aspect, the control valve is controlled by a pressure differential between a first hydraulic circuit which is hydraulically connected to the inversion cylinder and a second hydraulic circuit which is hydraulically connected to the alignment cylinder.

Advantageously, a hydraulic circuit which may be freely selected between the first or second hydraulic circuit is further hydraulically connected to the pressurization chamber of the hydraulic blocking cylinder. According to another advantageous aspect, the control valve comprises a single-action retention valve which is configured to intercept a flow of fluid in one direction for discharge through the freely selectable hydraulic circuit. It will be appreciated that, in this context, the retention valve is preferably controlled so as to open by the pressure differential between the first and second hydraulic circuit.

The invention also allows the use of a single-action hydraulic cylinder which is provided with a single pressurization chamber (or to control a single pressurization chamber of a double-action cylinder) in order to block the tilting of the support of the wheel in both operating positions at one side and the other of the frame following the rotation thereof.

In some preferred embodiments, the hydraulic blocking cylinder is connected at one side to the frame of the plough and at the other side to a support of the wheel. More specifically, the hydraulic blocking cylinder has a longitudinal end which is connected to the frame of the plough and the opposite longitudinal end which is connected to the support of the wheel. It will be appreciated that, preferably, the support of the wheel is mounted on the frame pivotably between the two rotation positions at the opposite sides of the frame. This structure allows the support of the wheel to be blocked not only in the two rotation positions at the opposite sides of the frame, but when needed also in an intermediate rotation position between the two positions at the opposite sides of the frame, for example, a rotation position through approximately 90° from each of the two positions at the opposite sides of the frame, so as to position the wheel in a position suitable for transporting the plough. To this end, in some embodiments, the support of the wheel is mounted on the frame pivotably between the two positions about an axis parallel with the advance direction of the plough in the ploughing or transport step.

With regard to the ploughing operating positions, when the pressurization chamber of the hydraulic blocking cylinder is supplied with pressure, it is preferable for the support of the wheel to be drawn back into abutment against an abutment, for example, an abutment of the frame, by means of a respective abutment of the support of the wheel in both blocking operating positions at the opposite sides of the frame. In this manner, it is advantageously obtained that the plough in a ploughing operating position discharges its own weight on the corresponding abutment of the support of the wheel and not on the hydraulic blocking cylinder. Furthermore, precisely as a result of the effect of the weight of the plough, it is advantageously obtained that, in a ploughing operating position, the support of the wheel remains in abutment against the abutment of the frame even if the pressure in the hydraulic blocking cylinder should accidentally be inadequate.

Advantageously, the support of the wheel is adjustable by means of a hydraulic adjustment cylinder for adjusting the working depth of the plough.

The features and advantages of the invention will be better appreciated from the detailed description of a preferred though non-limiting embodiment of a reversible plough according to the invention which is illustrated by way of non-limiting example with reference to the appended drawings, in which:
- Figure 1 illustrates the support of the depth wheel provided with the hydraulic blocking cylinder according to the invention;
- Figure 2 is a rear view of the headstock of the plough according to the invention;
- Figure 3 illustrates the articulation of the frame of the plough to the headstock of Figure 2;
- Figures 4 and 5 are a diagram of the valve group in the unblocking and blocking steps of the wheel of Figure 1, respectively;
- Figure 6 is a diagram of a detail of Figures 4 and 5;
- Figures 7 to 11 illustrate a sequence of steps for inverting the plough according to the invention;
- Figure 12 is a diagram of a detail of Figures 4 and 5.

With reference to the Figures cited, a reversible plough 1 comprises a headstock 2 which is provided with a three-point attachment to an agricultural tractor which is not illustrated and by means of which the plough can be pulled for the ploughing work, as will be better explained below.

There is hinged to the headstock 2 a frame 3 which in turn carries at least one pair (and preferably a plurality of pairs) of opposite ploughing members 4. An inversion cylinder 5 is interposed between the frame 3 and the headstock 2 in order to rotate the frame in relation to the headstock between two ploughing operating positions. Advantageously, the two ploughing operating positions are opposite through approximately 180°. According to another advantageous aspect, in the two ploughing operating positions the ploughing members 4 at the same side of the frame 3 are engaged in the ground to be ploughed, respectively.

In an aspect, the rotation of the frame 3 about the hinging axis thereof is through approximately 180°. It will be appreciated that the rotation of the frame 3 and consequently of the ploughing members 4 is brought about from a positioning step at one side of the plough, in which the ploughing members 4 advantageously turn over a section of ploughed ground at one side during advance travel, to a repositioning step at the opposite side, in which the ploughing members 4 advantageously turn over the section of ploughed ground at the same side during return travel in the opposite direction, carrying out even ploughing in this manner.

The rotation of the frame 3 passes via a dead centre position of the inversion cylinder 5. Advantageously, in this position the inversion cylinder 5 has a rod 5a which is retracted to the greatest extent and a first and second chamber 5c, 5d which are delimited in the cylinder 5 by a piston 5b in a maximum volume and minimum volume condition, respectively.

In preferred embodiments, there is further provided between the frame 3 and headstock 2 an alignment cylinder 6 which is configured to reduce the inclination angle of the frame 3 with respect to the rotation axis thereof, moving the frame 3 towards the rotation axis thereof during the step preceding rotation in order to facilitate the rotation itself and the dead centre being overcome and further to prevent the ploughing members 4 or other members of the plough from touching ground during the inversion rotation. In the same manner, the alignment cylinder 6 provides for moving the frame 3 back into the initial adjustment position once rotation is complete. Advantageously, the alignment cylinder 6 is configured in order to intervene in the inclination angle of the frame 3 with respect to the rotation axis thereof without varying the working width. In an aspect, the alignment cylinder 6 also has a first and a second chamber 6c, 6d which are delimited by a piston 6b which is provided with a rod 6a.

It may be noted that, in the present context, the term "alignment" is preferably intended to be understood to mean the action of reducing the ploughing width of the plough 1 by moving the frame 3 towards the rotation axis thereof.

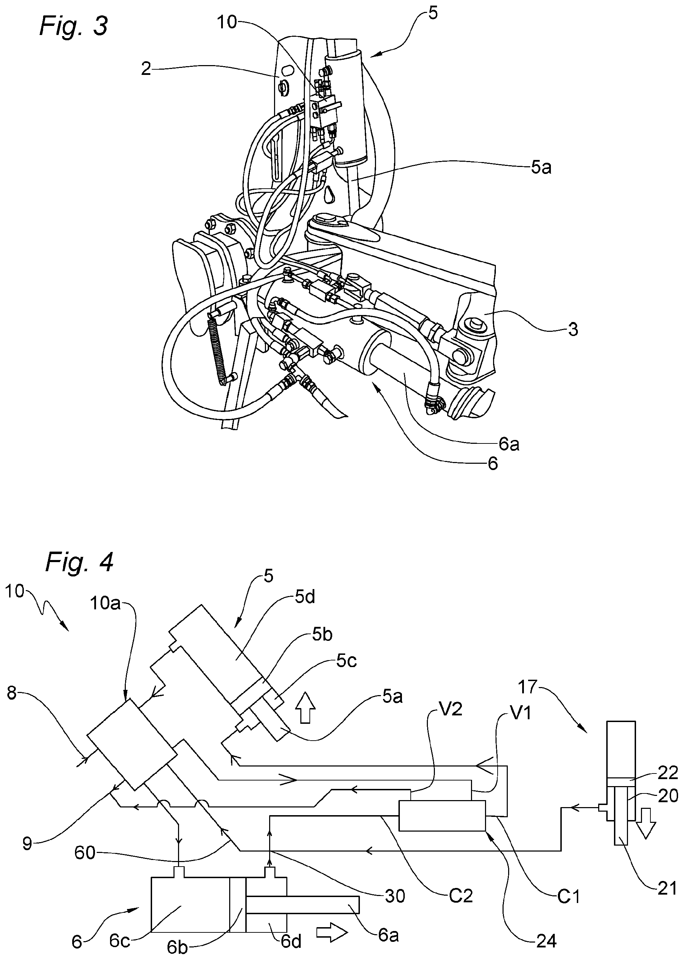

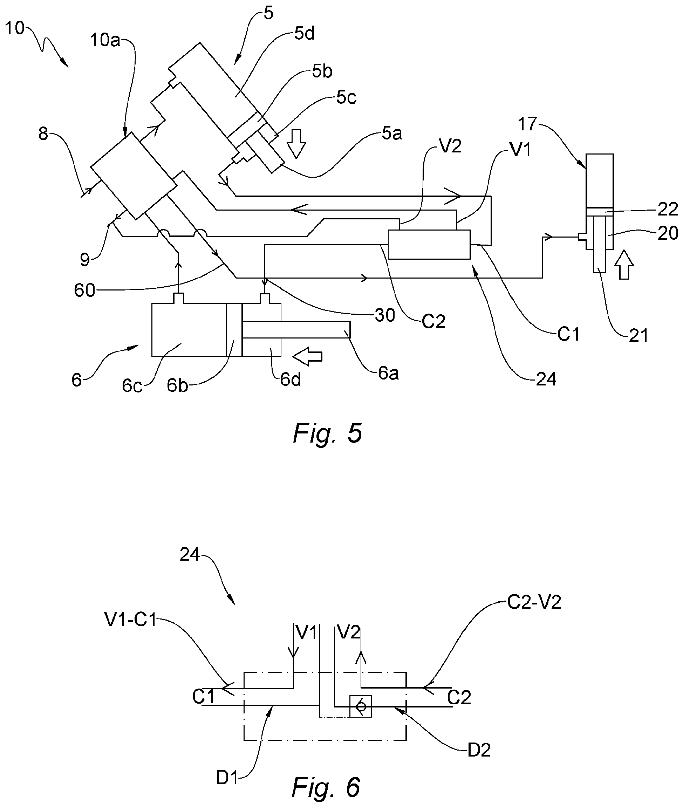

In an aspect, the inversion cylinder 5 and alignment cylinder 6 are actuated by a pressurized hydraulic fluid which is provided by the towing tractor (not shown) of the plough 1 by means of a supply tubing 8 and a discharge tubing 9 via a valve group which is generally designated 10. A possible diagram of the valve group 10 is illustrated in Figures 4 and 5.

This diagram illustrates a so-called rotation valve 10a with a memory which is provided in such a manner that, by actuating the rotation control of the plough 1 on the agricultural tractor so as to connect the supply tubing 8 to the source of pressurized fluid and the discharge tubing 9 for discharge, the alignment of the frame 3 is activated via the alignment cylinder 6, the rotation of the frame 3 is started by means of the inversion cylinder 5 and, once the rotation is completed, the frame 3 is re-aligned in accordance with the desired adjustment by means of the alignment cylinder 6.

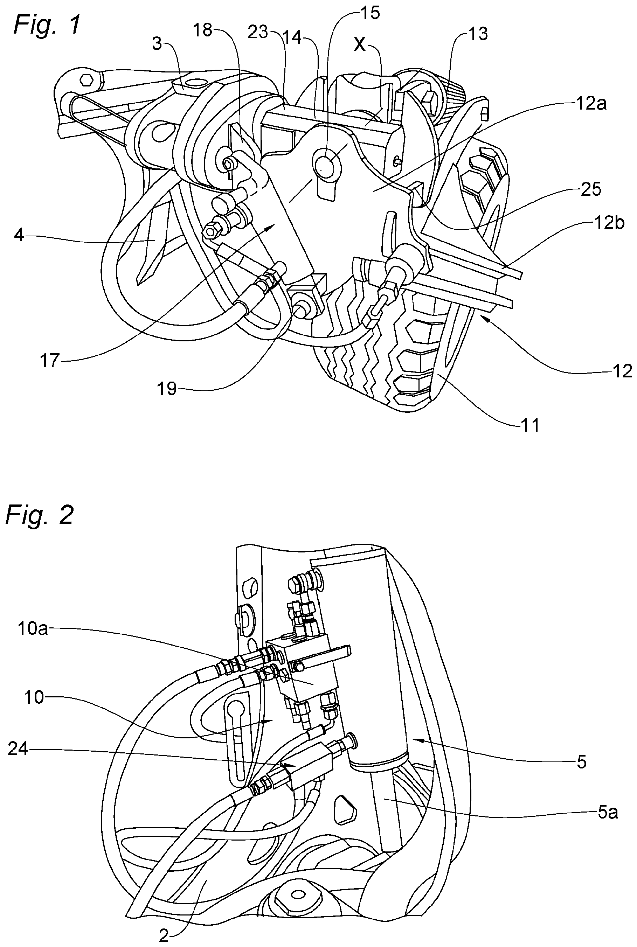

As shown in the example of Figure 1, a support wheel 11 is mounted on the frame 3 by means of a support 12 which can be adjusted by means of a hydraulic adjustment cylinder 13 for adjusting the working depth of the reversible plough. It will be appreciated that, in some embodiments, the hydraulic adjustment cylinder 13 can be replaced or supplemented by a mechanical tie rod (not shown) for adjusting the working depth of the plough. In a preferred embodiment, the support 12 of the wheel 11 is mounted in a tiltable manner on a bracket 14, on which it is hinged by means of a pin 15 with an axis X.

It is preferable for the bracket 14 to be fixed to the frame 3, for example, in a rigid manner. It is further preferable for the bracket 14 to project from the frame 3.

Preferably, the axis X is parallel with the advance direction of the plough in the ploughing step and, still in a preferable manner, substantially parallel in the ploughing operating position with the plane defined by the ground to be ploughed.

The wheel 11 together with the support 12 is pivotable about the axis X of the pin 15 between two opposite positions through approximately 180° which are consequent and coherent with the reversal of the frame 3 of the plough 1 by means of the inversion cylinder 5. As a result of the reversal of the frame 3, the wheel 11 will advantageously be arranged at one side and at the opposite side of the frame 3, respectively, and still orientated towards the ground.

The blocking of the tilting of the support 12 in both of these two operating positions is carried out by means of a hydraulic blocking cylinder 17.

In an aspect, the hydraulic blocking cylinder 17 is interposed between a flange 18 of the bracket 14 and an additional pin 19 which is positioned on the support 12. The hydraulic blocking cylinder 17 has such dimensions as to allow the tilting of the wheel 11 through approximately 180° about the axis of the pin 15. Preferably, this involves a single-action hydraulic cylinder, the rod 21 and piston 22 of which define a single pressurization chamber 20 which, when it is supplied with pressurized oil, applies a return movement of the rod 21 into a retracted position while, when it is connected for discharge, it allows the free extension of the rod 21 as a result of the effect of gravitational force acting on the wheel 11 in order to allow the tilting of the wheel 11 as indicated above.

It will be appreciated that, when the pressurization chamber 20 of the blocking cylinder 17 is supplied with pressure, the support 12 is preferably drawn back into abutment against an abutment 23 of the bracket 14 by means of a respective abutment 25 thereof in both blocking operating positions. In a preferred embodiment, therefore, the bracket 14 has two opposite abutments 23 which are configured to abut corresponding abutments 25 of the support 12.

It must be observed that, preferably, the support 12 of the wheel comprises a first support 12a which is hinged on the bracket 14 by means of the pin 15 with an axis X and a second support 12b which is hinged on the first support 12a so as to allow the tilting of the second support 12b with respect to the first support 12a.

It is preferable for the abutments 25 to be formed on corresponding opposite sides of the first support 12a.

Advantageously, the wheel 11 is associated with the second support 12b in such a manner that the tilting of the second support 12b with respect to the first support 12a allows adjustment of the working depth of the plough. It will be appreciated that the hydraulic adjustment cylinder 13 is interposed between the first support 12a and the second support 12b so as to adjust the position of the second support 12b with respect to the first support 12a. The hydraulic blocking cylinder 17, instead, is preferably interposed between the flange 18 of the bracket 14 and the additional pin 19 which is placed on the first support 12a. In this manner, the hydraulic adjustment cylinder 13 is advantageously configured to adjust the working depth of the plough 1 independently of the actuation of the hydraulic blocking cylinder 17.

To this end, it is preferable for, at least in the two ploughing operating positions, the hydraulic adjustment cylinder 13 and the hydraulic blocking cylinder 17 not to be coplanar.

According to another advantageous aspect, the wheel 11 is reversible together with the frame 3 in both the rotation positions at the opposite sides of the frame 3 while keeping the working depth of the plough 1 unchanged.

Furthermore, as a result of the structural characteristics mentioned above, it is possible to arrange the wheel 11 in a position suitable for transporting the plough 1.

In particular, when the frame 3 is rotated into a transport position, that is to say, an intermediate rotation position of the frame 3 between the two ploughing operating positions, typically through approximately 90° from each of the two ploughing operating positions, the support 12 of the wheel can rotate about the axis X in a consequent and coherent manner with the rotation of the frame 3 up to an intermediate rotation position of the support 12 between the two positions at the opposite sides of the frame, preferably through approximately 90° from each of the two positions at the opposite sides of the frame.

Following this rotation, the support 21 of the wheel can be blocked in the individual intermediate rotation position by actuating the hydraulic blocking cylinder 17.

During the rotation of the support 12 away from and towards the intermediate rotation position, the depth adjustment cylinder 13 may remain connected to the support 12 and may keep its adjustment unchanged.

The hydraulic connection of the blocking cylinder 17 is schematically shown in the examples of Figures 4 and 5.

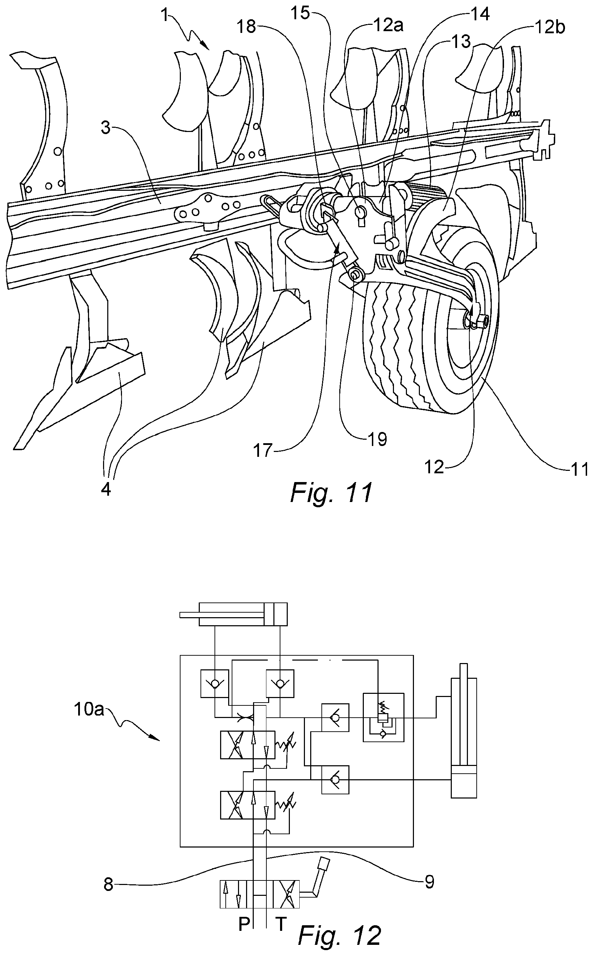

As shown in the examples of Figures 4 and 5, the valve group 10 comprises the rotation valve 10a. The diagram of the rotation valve 10a is illustrated in the example of Figure 12. It will be appreciated that, in an aspect, the rotation valve 10a allows the alignment operation of the frame 3 and rotation operation thereof to be carried out using the maximum pressure valves which are suitably calibrated to carry out the alignment control sequence by raising, inversion and repositioning of the frame 3.

In an embodiment, the hydraulic connection of the hydraulic blocking cylinder 17 is joined to the valve group 10 with a control valve 24 which controls the supply and discharge of the pressurization chamber 20 of the blocking cylinder 17. It will be appreciated that, in an aspect, the pressurization chamber 20 is the only pressurization chamber of the hydraulic cylinder 17. It must be observed that the hydraulic connection of the pressurization chamber 20 to the valve group 10 is brought about at the location 30, to which there are also hydraulically connected the rotation valve 10a, the second chamber 6d of the alignment cylinder 6 and the branch C2 of the second hydraulic circuit D2 of the control valve 24, as set out in detail below.

The diagram of the control valve 24 and the relevant hydraulic connection is illustrated in the example of Figure 6. A first hydraulic circuit D1 and a second hydraulic circuit D2 of the control valve 24 can be seen.

The first hydraulic circuit D1 comprises a branch V1 which hydraulically connects the rotation valve 10a and control valve 24 and a branch C1 which hydraulically connects the control valve 24 and the first chamber 5c of the inversion cylinder 5. Advantageously, the branch V1 and the branch C1 are hydraulically connected to each other in the control valve 24.

The second hydraulic circuit D2 comprises a branch V2 which hydraulically connects the discharge tubing 9 and the control valve 24, and a branch C2 which hydraulically connects the control valve 24 and the location 30. Advantageously, the branch V2 and the branch C2 are hydraulically connected to each other in the control valve 24 with a single-action retention valve, which is controlled so as to open as set out in detail below, being interposed.

In the first hydraulic circuit D1 of the control valve 24, the fluid circulation is free in both directions from the branch V1 towards the branch C1 (direction V1-C1) and vice versa (direction C1-V1).

In the second hydraulic circuit D2 of the control valve 24, the fluid circulation is free in the direction from the branch V2 towards the branch C2 (direction V2-C2) while it is normally blocked in one direction in the opposite direction from the branch C2 towards the branch V2 (direction C2-V2). The control of the flow in the direction C2-V2 is dependent on the pressure difference which exists between the two hydraulic circuits of the control valve 24 (first hydraulic circuit D1 with respect to the second hydraulic circuit D2). The unblocking of the control valve 24 in the direction C2-V2 is subordinate to the fact that the pressure differential in the first circuit D1 exceeds by a predetermined threshold value (for example, 4 bar) the value of the second circuit D2. For example, when the pressure in the first circuit D1 is approximately 200 bar and the pressure in the second circuit D2 is approximately 0 bar, the valve is open in the direction C2-V2 while, when the pressure reaches 0 bar in the first circuit D1 and 200 bar in the second circuit D2, the passage is blocked.

For adjusting the oil flow through the control valve 24, the control valve 24 may comprise a freely selectable actuation between mechanical, hydraulic, pneumatic, electrical, electronic actuation and/or actuation by means of gravitational force.

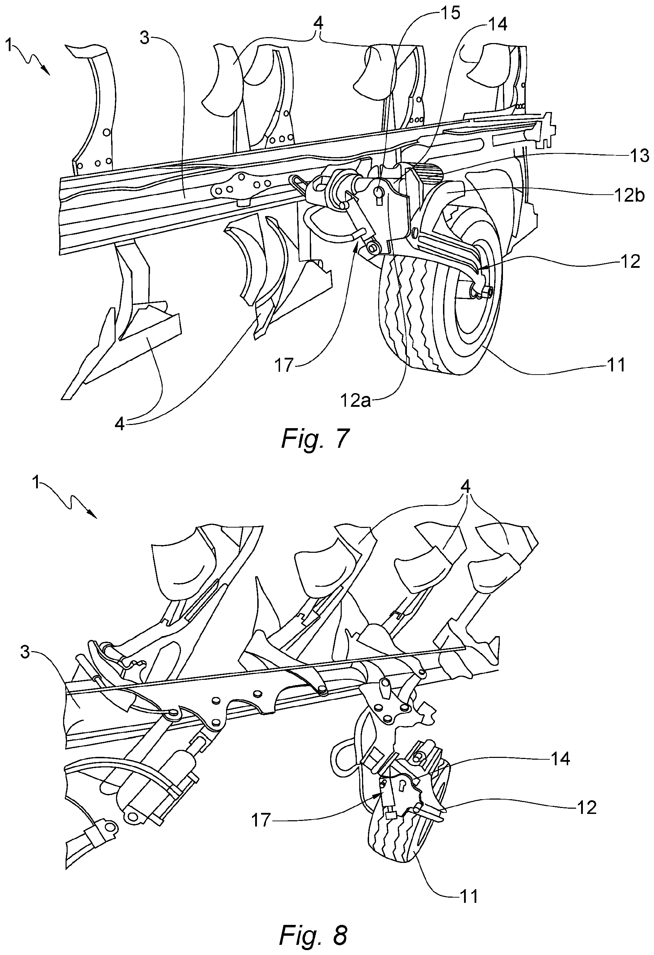

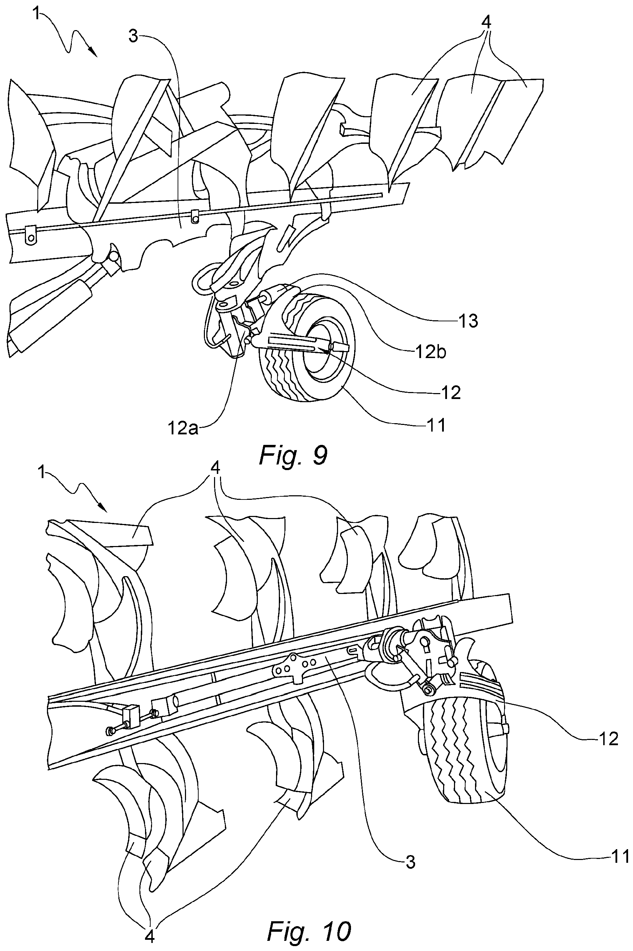

It must be observed that the plough 1 is configured to carry out an inversion of the frame 3 by approximately 180° about the inversion axis in a first rotation direction or in a second rotation direction counter to the first rotation direction so as to rotate the frame 3 in relation to the headstock 2 between two ploughing operating positions. In the sequence of Figures 7 to 11, purely for illustrative purposes, the inversion steps of the plough are illustrated in a manner changed with respect to the normal inversion steps. In practice, the frame 3 rotates through 90° in a first rotation direction from Figure 7 to Figure 9 and then, in order to clearly show the support wheel 11 in Figures 10 and 11, from Figure 9 to Figure 11 the frame 3 does not complete the inversion but instead it rotates through 90° in a second rotation direction counter to the first rotation direction, returning substantially to the starting position thereof already illustrated in Figure 7. When the inversion control of the plough, which serves to rotate the frame 3 through 180° about the individual rotation axis, is actuated in order to invert the series of ploughing members 4 into a working operating position, pressurized oil is conveyed (for example, 200 bar) to the supply tubing 8 and the discharge tubing 9 is connected for discharge, as shown in the hydraulic diagram of the example of Figure 4.

It will be appreciated that the hydraulic diagram of Figure 4 substantially corresponds to the inversion steps of the frame from Figure 7 to Figure 9.

Under this condition, the rotation valve 10a authorizes the discharge of the rod 6a of the alignment cylinder 6 with a resultant supply of pressurized oil to the first chamber 6c (for example, 200 bar) and discharge of oil from the second chamber 6d thereof.

It will be appreciated that, advantageously, under these conditions the oil being discharged from the second chamber 6d of the alignment cylinder cannot flow to the control valve 24 because the pressure in the first chamber 5c of the inversion cylinder is 0 bar and therefore the control valve 24 prevents the passage through the second circuit D2.

In practice, in the first alignment step of the frame, the oil which is discharged from the second chamber 6d of the alignment cylinder flows to the rotation valve 10a through the channel 60. In an aspect, the oil which is discharged from the alignment cylinder 6 in this step can flow only through the channel 60 because the flow out of the second chamber 6d is at the theoretical pressure of 0 bar, as in the first chamber 5c of the inversion cylinder (also at the theoretical pressure of 0 bar). Therefore, there is no variation of pressure between the first circuit D1 and the second circuit D2 and the control valve 24 prevents the flow in the direction C2-V2. In fact, it must be observed that, under these conditions, the inversion cylinder 5 has pressure only in the second chamber 5d thereof necessary for keeping the inversion cylinder 5 in position, and therefore the frame 3.

When the rotation starts, the first chamber 5c of the inversion cylinder will have a theoretical pressure of 200 bar and will supply the first circuit D1 with theoretical pressure of 200 bar. In this manner, there will be generated a pressure differential between the first circuit D1 and the second circuit D2. From the time when, in this step, the second circuit D2 is at the theoretical pressure of 0 bar, the control valve 24 opens by causing the oil to flow from the pressurization chamber 20 of the blocking cylinder 17.

Under these conditions, the hydraulic blocking cylinder 17 of the wheel 11 is free to discharge hydraulic fluid from the pressurization chamber 20 towards the control valve 24 and/or the rotation valve 10a, releasing the wheel 11. Once the alignment step of the frame 3 is completed by means of the alignment cylinder 6, the rotation valve 10a authorizes the inversion cylinder 5 to start the rotation of the frame 3, sending oil to the first chamber 5c of the inversion cylinder 5. Such an operation will cause oil to pass through the first circuit D1 of the control valve 24 in the direction V1-C1 free from impediments.

Under these conditions, the first circuit D1 of the control valve 24 is under pressure (at the theoretical pressure of 200 bar) while the second circuit D2 of the control valve 24 is discharging in the direction C2-V2 (at the theoretical pressure of 0 bar). Therefore, the control valve 24 does not prevent the passage of oil through the second circuit D2 in the direction C2-V2, connecting for discharge the pressurization chamber 20 of the hydraulic blocking cylinder 17 of the wheel 11 and allowing the resultant extraction of the rod 21 by the effect of gravitational force on the wheel 11.

When the inversion cylinder 5 has reached the dead centre, the rotation valve 10a authorizes continuation of the inversion and therefore sends pressurized fluid to the second chamber 5d of the inversion cylinder 5, at the same time connecting for discharge (discharge tubing 9) the first chamber 5c, as shown in Figure 5.

It will be appreciated that the hydraulic diagram of the example of Figure 5 substantially corresponds to the inversion steps of the frame from Figure 9 to Figure 11.

In this case, the first circuit D1 of the control valve 24 in the direction C1-V1 is not subjected to any impediment and the oil can be discharged to the rotation valve 10a or the discharge tubing 9.

Once the rotation of the frame 3 is complete and the maximum extension point of the inversion cylinder 5 has been reached, the rotation valve 10a authorizes the alignment cylinder 6 to bring back the frame 3 of the plough 1 into a ploughing position by suppling pressurized fluid to the second chamber 6d of the alignment cylinder 6 through the channel 60.

Under these conditions, there will be pressure in the second hydraulic circuit D2 of the control valve 24 (theoretical pressure of 200 bar) while the first hydraulic circuit D1 will be connected for discharge (theoretical pressure of 0 bar). The second circuit D2 will therefore be closed and the oil coming from the rotation valve 10a through the channel 60 will be able to travel only to the alignment cylinder 6 and/or the blocking cylinder 17, bringing the wheel 11 into position and keeping the abutment 25 in abutment against the abutment 23.

It will be appreciated that the alignment cylinder 6 is used to ensure that the frame 3 has finished its own rotation and the wheel 11 is safely in the correct position to be blocked; however, the same procedure could be carried out by using the inversion cylinder 5. In this case, using only the inversion cylinder 5, it is possible to discharge the oil through the control valve 24 when there is a flow of oil to the first chamber 5c of the inversion cylinder. It must be observed that, in this case, it is necessary to directly connect the second chamber 5d and the branch C2 of the control valve (and therefore also the pressurization chamber 20 of the blocking cylinder). In this manner, during the inversion between the upward movement of the rod 5a of the inversion cylinder and the downward movement thereof, there is an immediate repositioning of the support 12 of the wheel (which is at 90°, vertical, with respect to the horizontal ploughing members 4) with the abutment 25 which will move into abutment against the abutment 23. In an aspect, there is provided a throttle valve (not shown) which is configured to slow down the repositioning of the support 12 of the wheel.

It will be appreciated that the inversion cylinder 5 is used to control the control valve 24 for ease of operation; however, the same function could be carried out using the alignment cylinder 6. In this case, the first chamber 6c of the alignment cylinder is connected to the first circuit D1 while the second chamber 6d and the pressurization chamber 20 are connected to the second circuit D2. In this case, the control valve 24 allows a discharge of the pressure from the second circuit D2 when the first chamber 6c is supplied. Advantageously, there is provided a pressure accumulator (not shown) which is hydraulically connected to the pressurization chamber 20 and which is configured to receive the oil which is discharged from the pressurization chamber 20 so as to allow the inversion of the blocking cylinder 17.

The invention thereby solves the problem proposed with a simple intervention for modifying the hydraulic installation and using a single-action cylinder for blocking the wheel 11.

Advantageously, the control thereof is completely automated and does not require any structural complications.

The invention achieves a number of other advantages, including:
- preventing incorrect positionings of the wheel support,
- always ensuring the correct alignment of the wheel with respect to the vertical direction of the ploughing members, including without the correct vertical arrangement thereof (such as, for example, under working conditions on a hill),
- ensuring the positioning of the wheel by preventing the accidental lifting thereof even if pressure should accidentally be insufficient in the hydraulic blocking cylinder,
- allowing the positioning of the wheel in a position suitable for transporting the plough without having to disconnect the depth adjustment cylinder,
- preventing premature wear of the wheel support as a result of incorrect alignments.

## Claims

1. A reversible plough (1) having a headstock (2), on which there is hinged a frame (3) which in turn carries at least one pair of opposite ploughing members (4), having an inversion cylinder (5) between the frame (3) and the headstock (2) in order to rotate the frame (3) in relation to the headstock (2) between two ploughing operating positions from a positioning step at one side of the plough (1) to a repositioning step at the opposite side passing via a dead centre position of the inversion cylinder (5) and having a support wheel (11) which is mounted on the frame (3) of the plough (1) in order to adjust the working depth thereof, the wheel (11) being reversible together with the frame (3) in order to adjust the working depth of the plough (1) in both rotational positions at the opposite sides of the frame (3) of the plough (1) and being able to be blocked in an operating position by means of a hydraulic blocking cylinder (17), wherein the hydraulic blocking cylinder (17) has a pressurization chamber (20) which is selectively hydraulically connected to the inversion cylinder (5) and/or an alignment cylinder (6) by means of a control valve (24), the control valve (24) being configured to connect the pressurization chamber (20) for discharge during the step of rotating the plough (1) by the inversion cylinder (5) and to supply the chamber (20) with pressure when the inversion cylinder (5) and/or the alignment cylinder (6) is/are carrying out or have completed the repositioning step, the hydraulic blocking cylinder (17) being configured to allow the orientation of the wheel (11) during the rotation of the plough (1) and to block the orientation of the wheel (11) when the plough (1) takes up a ploughing operating position, wherein the hydraulic blocking cylinder (17) is connected at one side to the frame (3) of the plough (1) and at the other side to a support (12) of the wheel (11), the support (12) being mounted on the frame (3) pivotably between the two rotation positions at the opposite sides of the frame (3).

2. A plough (1) according to claim 1, wherein, when the pressurization chamber (20) is supplied with pressure, the support (12) is drawn back into abutment against an abutment (23) by means of a respective abutment (25) of the support (12) in both blocking operating positions at the opposite sides of the frame (3).

3. A plough (1) according to claim 2, wherein the abutment (23) is fixedly joined to the frame (3).

4. A plough (1) according to any one of the preceding claims, wherein the support (12) is mounted in a tiltable manner on a bracket (14).

5. A plough (1) according to claim 4, wherein the bracket (14) is fixed to the frame (3).

6. A plough (1) according to claim 4 or 5, wherein the support (12) is hinged on the bracket (14) by means of a pin (15).

7. A plough (1) according to claim 6, wherein the pin (15) has an axis (X) which is parallel with the advance direction of the plough (1) in a ploughing or transport step, and/or wherein the hydraulic blocking cylinder (17) has such dimensions as to allow the tilting of the wheel (11) through 180° about the axis (X) of the pin (15).

8. A plough (1) according to any one of claims 4 to 7, wherein, when the pressurization chamber (20) is supplied with pressure, the support (12) is drawn back into abutment against an abutment (23) of the bracket (14) by means of a respective abutment (25) of the support (12) in both blocking operating positions at the opposite sides of the frame (3).

9. A plough (1) according to any one of claims 6 to 8, wherein the support (12) comprises a first support (12a) which is hinged on the bracket (14) by means of the pin (15) and a second support (12b) which is hinged on the first support (12a) so as to allow the tilting of the second support (12b) with respect to the first support (12a).

10. A plough (1) according to claim 9, wherein the wheel (11) is associated with the second support (12b) in such a manner that the tilting of the second support (12b) with respect to the first support (12a) allows adjustment of the working depth of the plough (1), and/or wherein a hydraulic adjustment cylinder (13) or a mechanical tie rod is interposed between the first support (12a) and the second support (12b) so as to adjust the position of the second support (12b) with respect to the first support (12a).

11. A plough (1) according to any one of claims 4 to 10, wherein the hydraulic blocking cylinder (17) is interposed between a flange (18) of the bracket (14) and an additional pin (19) which is positioned on the support (12).

12. A plough (1) according to any one of the preceding claims, wherein it is allowed to position the wheel (11) in a position suitable for transporting the plough (1).

13. A plough (1) according to any one of the preceding claims, wherein the control valve (24) is controlled by a pressure differential between a first hydraulic circuit (D1) which is hydraulically connected to the inversion cylinder (5) and a second hydraulic circuit (D2) which is hydraulically connected to the alignment cylinder (6), preferably wherein a freely selectable hydraulic circuit between the first or second hydraulic circuit (D1, D2) is further hydraulically connected to the pressurization chamber (20) of the hydraulic blocking cylinder (17).

14. A plough (1) according to any one of the preceding claims, wherein the hydraulic blocking cylinder (17) is a single-action hydraulic cylinder which is provided with a single pressurization chamber (20), and/or wherein the support (12) is adjustable by means of a hydraulic adjustment cylinder (13) and/or a mechanical tie rod which is/are configured to adjust the working depth of the plough (1).

15. A plough (1) according to any one of the preceding claims, wherein the support (12) is mounted on the frame (3) pivotably between the two rotational positions at the opposite sides of the frame (3) about an axis (X) parallel with the advance direction of the plough (1) in the ploughing step, and/or wherein the wheel (11) is reversible together with the frame (3) in both rotational positions at the opposite sides of the frame (3) while keeping the working depth of the plough (1) unchanged.

## Patentansprüche

1. Drehpflug (1) mit einem Pflugkopf (2), an dem ein Rahmen (3) angelenkt ist, der seinerseits zumindest ein Paar gegenüberliegende Pflugkörper (4) trägt, mit einem Umkehrzylinder (5) zwischen dem Rahmen (3) und dem Pflugkopf (2), um den Rahmen (3) in Bezug auf den Pflugkopf (2) zwischen zwei Pflugarbeitspositionen von einem Positionierschritt auf einer Seite des Pflugs (1) zu einem Umsetzschritt auf der gegenüberliegenden Seite zu drehen, der über eine Totpunktposition des Umkehrzylinders (5) verläuft, und mit einem Stützrad (11), das am Rahmen (3) des Pflugs (1) montiert ist, um dessen Arbeitstiefe einzustellen, wobei das Rad (11) zusammen mit dem Rahmen (3) zum Einstellen der Arbeitstiefe des Pflugs (1) in beiden Drehpositionen an den gegenüberliegenden Seiten des Rahmens (3) des Pflugs (1) umkehrbar ist und mittels eines hydraulischen Blockierzylinders (17) in einer Arbeitsposition blockierbar ist, wobei
der hydraulische Blockierzylinder (17) eine Druckkammer (20) aufweist, die selektiv mit dem Umkehrzylinder (5) und/oder einem Ausrichtzylinder (6) mittels eines Steuerventils (24) hydraulisch verbunden ist, wobei das Steuerventil (24) zum Verbinden der Druckkammer (20) zur Entladung während des Drehschritts des Pflugs (1) durch den Umkehrzylinder (5) konfiguriert ist und zum Druckbeaufschlagen der Kammer (20) konfiguriert ist, wenn der Umkehrzylinder (5) und/oder der Ausrichtzylinder (6) den Umsetzschritt durchführt oder abgeschlossen hat, wobei der hydraulische Blockierzylinder (17) zum Ermöglichen der Ausrichtung des Rades (11) während der Drehung des Pflugs (1) und zum Blockieren der Ausrichtung des Rades (11) konfiguriert ist, wenn der Pflug (1) eine Pflugarbeitsposition einnimmt, wobei der hydraulische Blockierzylinder (17) auf der einen Seites mit dem Rahmen (3) des Pflugs (1) und auf der anderen Seite mit einer Halterung (12) des Rads (11) verbunden ist, wobei die Halterung (12) am Rahmen (3) zwischen den beiden Drehpositionen an den gegenüberliegenden Seiten des Rahmens (3) schwenkbar montiert ist.

2. Pflug (1) nach Anspruch 1, wobei bei Druckbeaufschlagung der Druckkammer (20) die Halterung (12) mittels eines jeweiligen Anschlags (25) der Halterung (12) in beiden blockierenden Arbeitspositionen an den gegenüberliegenden Seiten des Rahmens (3) in Anlage gegen die Schulter (23) des Trägers (14) zurückgezogen wird.

3. Pflug (1) nach Anspruch 2, wobei die Schulter (23) mit dem Rahmen (3) fest verbunden ist.

4. Pflug (1) nach einem der vorhergehenden Ansprüche, wobei die Halterung (12) an einem Träger (14) kippbar montiert ist.

5. Pflug (1) nach Anspruch 4, wobei der Träger (14) am Rahmen (3) befestigt ist.

6. Pflug (1) nach Anspruch 4 oder 5, bei dem die Halterung (12) mittels eines Bolzens (15) am Träger (14) angelenkt ist.

7. Pflug (1) nach Anspruch 6, wobei der Bolzen (15) eine Achse (X) aufweist, die parallel zur Vorschubrichtung des Pflugs (1) in einem Pflug- oder Transportschritt verläuft, und/oder wobei der hydraulische Blockierzylinder (17) so dimensioniert ist, dass dieser das Kippen des Rades (11) um 180° um die Achse (X) des Bolzens (15) ermöglicht.

8. Pflug (1) nach einem der Ansprüche 4 bis 7, wobei bei Druckbeaufschlagung der Druckkammer (20) die Halterung (12) mittels eines jeweiligen Anschlags (25) der Halterung (12) in beiden blockierenden Arbeitspositionen an den gegenüberliegenden Seiten des Rahmens (3) in Anlage gegen eine Schulter (23) des Trägers (14) zurückgezogen wird.

9. Pflug (1) nach einem der Ansprüche 6 bis 8, wobei die Halterung (12) eine erste Halterung (12a), die mittels des Bolzens (15) am Träger (14) angelenkt ist, und eine Halterung (12b) umfasst, die an der ersten Halterung (12a) angelenkt ist, um das Kippen der zweiten Halterung (12b) in Bezug auf die erste Halterung (12a) zu ermöglichen.

10. Pflug (1) nach Anspruch 9, wobei das Rad (11) mit der zweiten Halterung (12b) derart verbunden ist, dass das Kippen der zweiten Halterung (12b) in Bezug auf die erste Halterung (12a) die Einstellung der Arbeitstiefe des Pflugs (1) ermöglicht, und/oder wobei ein hydraulischer Einstellzylinder (13) oder eine mechanische Zugstange zwischen der ersten Halterung (12a) und der zweiten Halterung (12b) angeordnet ist, um die Position der zweiten Halterung (12b) in Bezug auf die erste Halterung (12a) einzustellen.

11. Pflug (1) nach einem der Ansprüche 4 bis 10, **dadurch gekennzeichnet, dass** der hydraulische Blockierzylinder (17) zwischen einem Flansch (18) des Trägers (14) und einem zusätzlichen Bolzen (19), der am Träger (12) positioniert ist, angeordnet ist.

12. Pflug (1) nach einem der vorhergehenden Ansprüche, wobei das Positionieren des Rads (11) in eine für den Transport des Pflugs (1) geeignete Position ermöglicht wird.

13. Pflug (1) nach einem der vorhergehenden Ansprüche, wobei das Steuerventil (24) durch eine Druckdifferenz zwischen einem ersten Hydraulikkreislauf (D1), der mit dem Umkehrzylinder (5) hydraulisch verbunden ist, und einem zweiten Hydraulikkreislauf (D2), der mit dem Ausrichtzylinder (6) hydraulisch verbunden ist, gesteuert wird, wobei vorzugsweise ein frei wählbarer Hydraulikkreislauf zwischen dem ersten oder zweiten Hydraulikkreislauf (D1, D2) zudem hydraulisch mit der Druckkammer (20) des hydraulischen Blockierzylinders (17) verbunden ist.

14. Pflug (1) nach einem der vorhergehenden Ansprüche, wobei der hydraulische Blockierzylinder (17) ein einfachwirkender Hydraulikzylinder ist, der mit einer einzigen Druckkammer (20) versehen ist, und/oder wobei die Halterung (12) mittels eines hydraulischen Einstellzylinders (13) und/oder einer mechanischen Zugstange einstellbar ist, die zum Einstellen der Arbeitstiefe des Pflugs (1) konfiguriert ist/sind.

15. Pflug (1) nach einem der vorhergehenden Ansprüche, wobei die Halterung (12) am Rahmen (3) zwischen den beiden Drehpositionen an den gegenüberliegenden Seiten des Rahmens (3) um eine zur Vorschubrichtung des Pflugs (1) im Pflugschritt parallele Achse (X) schwenkbar montiert ist, und/oder wobei das Rad (11) zusammen mit dem Rahmen (3) in beiden Drehpositionen an den gegenüberliegenden Seiten des Rahmens (3) unter Beibehaltung der Arbeitstiefe des Pflugs (1) umkehrbar ist.

## Revendications

1. Charrue réversible (1) présentant une tête de retournement (2), sur laquelle est articulé un bâti (3) qui, à son tour, porte au moins une paire d'éléments de labour opposés (4), présentant un cylindre d'inversion (5) entre le bâti (3) et la tête de retournement (2) afin de faire tourner le bâti (3) par rapport à la tête de retournement (2) entre deux positions d'opération de labour d'une étape de positionnement sur un côté de la charrue (1) à une étape de repositionnement sur le côté opposé en passant par une position de point mort du cylindre d'inversion (5) et présentant une roue de support (11) qui est montée sur le bâti (3) de la charrue (1) afin de régler la profondeur de travail de celle-ci, la roue (11) étant réversible conjointement avec le bâti (3) afin de régler la profondeur de travail de la charrue (1) dans les deux positions de rotation sur les côtés opposés du bâti (3) de la charrue (1) et pouvant être bloquée dans une position d'opération au moyen d'un cylindre de blocage hydraulique (17), dans laquelle le cylindre de blocage hydraulique (17) présente une chambre de mise sous pression (20) qui est reliée hydrauliquement de façon sélective au cylindre d'inversion (5) et/ou à un cylindre d'alignement (6) au moyen d'une soupape de commande (24), la soupape de commande (24) étant configurée pour relier la chambre de mise sous pression (20) à des fins de décharge lors de l'étape de mise en rotation de la charrue (1) au moyen du cylindre d'inversion (5) et pour fournir à la chambre (20) une pression lorsque le cylindre d'inversion (5) et/ou le cylindre d'alignement (6) effectue/effectuent ou a/ont achevé l'étape de repositionnement, le cylindre de blocage hydraulique (17) étant configuré pour permettre l'orientation de la roue (11) lors de la rotation de la charrue (1) et pour bloquer l'orientation de la roue (11) lorsque la charrue (1) adopte une position d'opération de labour, dans laquelle le cylindre de blocage hydraulique (17) est relié sur un côté au bâti (3) de la charrue (1) et sur l'autre côté à un support (12) de la roue (11), le support (12) étant monté sur le bâti (3) de façon pivotante entre les deux positions de rotation sur les côtés opposés du bâti (3).

2. Charrue (1) selon la revendication 1, dans laquelle, lorsque la chambre de mise sous pression (20) reçoit une pression, le support (12) est ramené en butée contre une butée (23) au moyen d'une butée respective (25) du support (12) dans les deux positions d'opération de blocage sur les côtés opposés du bâti (3).

3. Charrue (1) selon la revendication 2, dans laquelle la butée (23) est reliée de manière fixe au bâti (3).

4. Charrue (1) selon l'une quelconque des revendications précédentes, dans laquelle le support (12) est monté sur une console (14) de manière à pouvoir s'incliner.

5. Charrue (1) selon la revendication 4, dans laquelle la console (14) est fixée au bâti (3).

6. Charrue (1) selon la revendication 4 ou 5, dans laquelle le support (12) est articulé sur la console (14) au moyen d'une broche (15).

7. Charrue (1) selon la revendication 6, dans laquelle la broche (15) présente un axe (X) qui est parallèle à la direction d'avancement de la charrue (1) dans une étape de labour ou de transport, et/ou dans laquelle le cylindre de blocage hydraulique (17) a des dimensions telles qu'il permet l'inclinaison de la roue (11) de 180° autour de l'axe (X) de la broche (15).

8. Charrue (1) selon l'une quelconque des revendications 4 à 7, dans laquelle, lorsque la chambre de mise sous pression (20) reçoit une pression, le support (12) est ramené en butée contre une butée (23) de la console (14) au moyen d'une butée respective (25) du support (12) dans les deux positions d'opération de blocage sur les côtés opposés du bâti (3).

9. Charrue (1) selon l'une quelconque des revendications 6 à 8, dans laquelle le support (12) comprend un premier support (12a) qui est articulé sur la console (14) au moyen de la broche (15) et un deuxième support (12b) qui est articulé sur le premier support (12a) de façon à permettre l'inclinaison du deuxième support (12b) par rapport au premier support (12a).

10. Charrue (1) selon la revendication 9, dans laquelle la roue (11) est associée au deuxième support (12b) de telle sorte que l'inclinaison du deuxième support (12b) par rapport au premier support (12a) permet le réglage de la profondeur de travail de la charrue (1), et/ou dans laquelle un cylindre de réglage hydraulique (13) ou un tirant mécanique est interposé entre le premier support (12a) et le deuxième support (12b) de façon à régler la position du deuxième support (12b) par rapport au premier support (12a).

11. Charrue (1) selon l'une quelconque des revendications 4 à 10, dans laquelle le cylindre de blocage hydraulique (17) est interposé entre une bride (18) de la console (14) et une broche supplémentaire (19) qui est positionnée sur le support (12).

12. Charrue (1) selon l'une quelconque des revendications précédentes, dans laquelle il est possible de positionner la roue (11) dans une position adaptée au transport de la charrue (1).

13. Charrue (1) selon l'une quelconque des revendications précédentes, dans laquelle la soupape de commande (24) est commandée par une différence de pression entre un premier circuit hydraulique (D1) qui est relié hydrauliquement au cylindre d'inversion (5) et un deuxième circuit hydraulique (D2) qui est relié hydrauliquement au cylindre d'alignement (6), de préférence dans laquelle un circuit hydraulique librement sélectionnable entre le premier ou le deuxième circuit hydraulique (D1, D2) est en outre relié hydrauliquement à la chambre de mise sous pression (20) du cylindre de blocage hydraulique (17).

14. Charrue (1) selon l'une quelconque des revendications précédentes, dans laquelle le cylindre de blocage hydraulique (17) est un cylindre hydraulique à simple action qui est doté d'une chambre de mise sous pression simple (20), et/ou dans laquelle le support (12) peut être réglé au moyen d'un cylindre de réglage hydraulique (13) et/ou d'un tirant mécanique qui est/sont configuré(s) pour régler la profondeur de labour de la charrue (1).

15. Charrue (1) selon l'une quelconque des revendications précédentes, dans laquelle le support (12) est monté sur le bâti (3) de façon pivotante entre les deux positions de rotation sur les côtés opposés du bâti (3) autour d'un axe (X) parallèle à la direction d'avancement de la charrue (1) lors de l'étape de labour, et/ou dans laquelle la roue (11) est réversible conjointement avec le bâti (3) dans les deux positions de rotation sur les côtés opposés du bâti (3) tout en maintenant inchangée la profondeur de travail de la charrue (1).
